# EUROPÄISCHE PATENTSCHRIFT

(11) **EP 3 142 206 B1**
(45) Veröffentlichungstag und Bekanntmachung des Hinweises auf die Patenterteilung: **23.05.2018**
(21) Anmeldenummer: 15184846.2
(22) Anmeldetag: 11.09.2015
(51) Int. Cl.: H02G 5/06

(54) **GLEICHSPANNUNGS-HOCHSPANNUNGSISOLATOR ZUR ISOLIERUNG EINES MIT GLEICHSPANNUNG BEAUFSCHLAGTEN LEITERS UND ZUGEHÖRIGES HERSTELLUNGSVERFAHREN**
HIGH VOLTAGE DC INSULATOR FOR ISOLATING A LINE SUBJECTED TO DIRECT CURRENT AND METHOD OF MANUFACTURING THE SAME
ISOLATEUR HAUTE TENSION/TENSION CONTINUE DESTINE A ISOLER UN CONDUCTEUR ALIMENTE EN TENSION CONTINUE ET PROCEDE DE FABRICATION CORRESPONDANT

(43) Veröffentlichungstag der Anmeldung: 15.03.2017
(73) Patentinhaber: ABB Schweiz AG, 5400 Baden (CH)
(72) Erfinder: Straumann, Ulrich, 8404 Winterthur (CH); Sykes, Thomas, 8006 Zürich (CH)
(74) Vertreter: ABB Patent Attorneys

(56) Entgegenhaltungen:
- WO-A1-2015/113795
- DE-A1- 3 311 218
- DE-A1- 19 523 074
- JP-A- H03 198 613
- JP-A- 2000 253 548
- JP-A- 2006 115 691
- JP-U- S50 149 883

## Beschreibung

Die Erfindung betrifft einen Gleichspannungs-Hochspannungsisolator zur Isolierung eines mit Gleichspannung beaufschlagten Leiters, die Verwendung eines Gleichspannungs-Hochspannungsisolators an einem mit Gleichspannung beaufschlagten Leiter, ein gasisoliertes Hochspannungssystem für Gleichspannung sowie ein Verfahren zum Herstellen eines Gleichspannungs-Hochspannungsisolators zur Isolierung eines mit Gleichspannung beaufschlagten Leiters.

Traditionell erfolgt die Übertragung großer Mengen von elektrischer Energie über weite Strecken größtenteils mittels Wechselstroms. Die meisten Netze für die allgemeine Versorgung sind hierbei für die Übertragung von dreiphasigem Wechselstrom ausgebildet, beispielsweise für die Übertragung auf einer Frequenz von ca. 50 Hz oder auf einer Frequenz von ca. 60 Hz. Die Phase der Spannung ist nominell um 120° gegenüber den benachbarten Phasen verschoben. In Bahnstrom-Fernübertragungsnetzen ist es auch üblich, einphasigen Wechselstrom zu übertragen, beispielsweise auf einer Frequenz von 16,7 Hz.

Für besondere Anwendungen, beispielsweise für die Synchronisation von Netzen, ist es auch üblich, große Mengen elektrische Energie per Gleichstrom auszutauschen. Die Strecken von Gleichstrom-Kurzkupplungen betragen oft nur einige Meter. Infolge von verbesserter Umrichtertechnik durch die Verwendung von Leitstungselektronik und dergleichen werden in jüngster Zeit auch große Mengen elektrischer Energie per Gleichstrom über weite Strecken übertragen. Diese Hochspannungs-Gleichstrom-Übertragungsleitungen sollen Distanzen von 1000 km oder mehr überbrücken. Bei beiden Arten von Anwendungsfällen, also sowohl bei der Übertragung von Wechselstrom, als auch bei der Übertagung von Gleichstrom, müssen die zur Übertragung bzw. zum Energieaustausch verwendeten Leitungen oder Kabel gegenüber ihrer Umgebung elektrisch isoliert werden. An die in den unterschiedlichen Fällen verwendeten Hochspannungsisolatoren werden jedoch elektrotechnische Anforderungen gestellt, die zueinander nicht vergleichbar sind. Im Falle von Wechselstrom-Übertragung erfolgen durch die Periodizität der Spannung regelmäßige Nulldurchgänge, so dass eine Ansammlung elektrischer Ladungen auf der Oberfläche der Isolatoren unwahrscheinlich ist. Außerdem überwiegen im Wechselstrombereich die reaktiven Effekte gegenüber den ohmschen Verlusten.

Für den Fall von Hochspannungsisolatoren bei Gleichstrom-Übertragung dagegen können sich elektrische Ladungen auf der Isolatoroberfläche ansammeln, was zu verstärkten elektrischen Feldern in der Peripherie des Hochspannungsisolators führt. In extremen Fällen kann es zu einer Inversion der Feldverteilung kommen, z. B. bei der Isolierung von Gleichspannungskabeln. Infolge von ohmschen Verlusten innerhalb des Isolatorkörpers sind außerdem die Verteilung der entstehenden Wärme sowie die Verteilung des elektrischen Feldes nicht mit den Fällen vergleichbar, in welchen ein Hochspannungsisolator zur Isolierung von Wechselspannung zum Einsatz kommt.

Es ist demnach nicht einfach möglich, bestehende Isoliervorrichtungen zur Isolierung von Wechselstrom führenden Leitungen auch für Gleichstrom führende Leitungen zu verwenden. Aus der EP 2 293 400 A1 ist ein Hochspannungsisolator bekannt, welcher innerhalb seines scheibenförmigen Isolatorkörpers eine Eingussarmatur sowie eine elektrisch leitfähige Feldsteuerelektrode aufweist. Im eingebauten Zustand des herkömmlichen Hochspannungsisolators in eine gasisolierte Schaltanlage ist die Eingussarmatur mit Hochspannung beaufschlagbar und mittels des Isolatorkörpers gegenüber einem Bezugspotential isoliert. Dadurch bildet sich ein elektrisches Feld im Isolatorkörper aus, welches von der Feldsteuerelektrode in seiner Feldstärke beeinflussbar ist. Die Feldsteuerelektrode ist bei dem herkömmlichen Hochspannungsisolator als wendelförmiger Körper aus einem Drahtmaterial ausgebildet. Dieser Hochspannungsisolator ist ausschließlich für Wechselspannungsanwendungen vorgesehen. Aus der JP 2006 115691 ist ein Hochspannungsisolator bekannt, welcher eine in Umfangsrichtung innerhalb des Isolierkörpers umlaufende Feldsteuerelektrode aufweist. Die Feldsteuerelektrode weist Durchdringungen auf, die dazu beitragen, dass während der Herstellung entstehende Glasbläschen dadurch emporsteigen.

Die WO2015/113795 offenbart einen Hochspannungsisolator der ebenfalls Feldsteuerelektroden mit Durchdringungen aufweist.

Die JP 2000 253548 offenbart eine gasisolierte Sammelschiene mit Gleichspannungs-Hochspannungsisolatoren.

Gemäß einigen Aspekten der vorliegenden Erfindung soll ein einfach herzustellender Hochspannungsisolator bereitgestellt werden, der für Gleichstrom verwendbar ist und/oder eine verbesserte Feldsteuerwirkung aufweist.

Erfindungsgemäß werden ein Gleichspannungs-Hochspannungsisolator gemäß Anspruch 1, die Verwendung eines Gleichspannungs-Hochspannungsisolators gemäß Anspruch 17, ein gasisoliertes Hochspannungssystem gemäß Anspruch 18, sowie ein Verfahren zum Herstellen eines Gleichspannungs-Hochspannungsisolators gemäß Anspruch 21 angegeben. Vorteilhafte Weiterbildungen und Ausführungsformen sind in den abhängigen Ansprüchen angegeben. Gemäß einem Aspekt der Erfindung wird ein Gleichspannungs-Hochspannungsisolator zur Isolierung eines mit Gleichspannung beaufschlagten Leiters gemäss Anspruch 1 angegeben. Gemäß einem weiteren Aspekt der Erfindung wird ein Verfahren zum Herstellen eines Gleichspannungs-Hochspannungsisolators zur Isolierung eines mit Gleichspannung beaufschlagten Leiters gemäss Anspruch 21 angegeben. Die Durchdringung (eine Öffnung in Radialrichtung) kann zu einer besseren Homogenität des Grundkörpers beitragen. Bei der Herstellung im Gussverfahren wird ein Gussmaterial, typischerweise ein isolierendes Harz mit einer Epoxid-Harzmatrix, in die Gussform eingebracht. Das Gussmaterial fließt während des Gussvorgangs um die Feldsteuerelektrode herum und soll diese möglichst gleichmäßig bedecken, um einen möglichst homogenen Aushärtungsvorgang zu erzielen. Infolge der Durchdringung kann das Gussmaterial während des Gussvorgangs auch durch diese Durchdringung hindurchfließen, d. h. es kann beidseitig um den ersten Umlaufbereich und beidseitig um den zweiten Umlaufbereich herumfließen. Bei Ausführungsformen der vorliegenden Erfindung wird die Gießbarkeit des Gussharzes merklich verbessert, was den Arbeitsablauf erleichtert.

Das Gussharz, das in der Gussform beim Einfüllen aufsteigt, beginnt typischerweise bereits auszuhärten, bevor der Gussvorgang vollständig abgeschlossen ist. Die entstehenden Gelierungsfronten, beispielsweise teilweise gehärtetes Gussharz an der momentanen Oberfläche des eingefüllten Gussharzes, beeinflussen bei Ausführungsformen der vorliegenden Erfindung die Homogenität des entstehenden Isolatorkörpers weniger als bei den herkömmlichen Lösungen. Hierzu tragen beispielsweise die Anordnung des ersten Umfangsbereichs und des zweiten Umfangsbereichs und die Ausbildung der Durchdringung zumindest in Teilbereichen bei.

Typische verwendete Gussharze unterliegen beim Aushärten einer gewissen Schrumpfung. Durch einen derartigen Schrumpfungsprozess können sich im ausgehärteten Gussmaterial bei herkömmlichen Hochspannungsisolatoren kleinere Hohlräume um feste Teile herum ausbilden, die in die Gussform eingebracht wurden und einen Teil des entstehenden Isolators bilden sollen, beispielsweise die oben erwähnten Feldsteuerelektroden. Derartige Hohlräume stellen unerwünschte Inhomogenitäten des Grundkörpers des herzustellenden Hochspannungsisolators dar. Bei dem Hochspannungsisolator gemäß Ausführungsformen der vorliegenden Erfindung wird das Entstehen solcher Hohlräume reduziert. Hierzu tragen wiederum beispielsweise die Anordnung des ersten Umfangsbereichs und des zweiten Umfangsbereichs und die Ausbildung der Durchdringung zumindest in Teilbereichen bei.

Bei Ausführungsformen verlaufen der erste Umfangsbereich und der zweite Umfangsbereich jeweils ringförmig in Umfangsrichtung innerhalb des Grundkörpers. Typischerweise sind der erste Umfangsbereich und der zweite Umfangsbereich nur bereichsweise in mehreren Bereichen voneinander beabstandet, d. h. der erste Umfangsbereich ist in den übrigen Bereichen mit dem zweiten Umfangsbereich mechanisch verbunden und elektrisch leitend verbunden. Auf diese Weise wird abschnittsweise eine Mehrzahl von Durchdringungen ausgebildet. Gemäß einem Aspekt der Erfindung kann die Feldsteuerelektrode dadurch weiterhin mechanisch ausreichend stabil ausgebildet sein.

Die Durchdringung ist bei Ausführungsformen der Erfindung als längliche Öffnung ausgebildet, d. h. sie weist in der Umfangsrichtung der Feldsteuerelektrode jeweils eine größere Ausdehnung auf als in der Richtung parallel zur Achse des Grundkörpers. Bei einer Mehrzahl von Durchdringungen ist typischerweise jede der Durchdringungen als längliche Öffnung ausgebildet.

Die Durchdringung kann auch gegenüber den herkömmlichen Lösungen eine Materialersparnis bewirken. Der erste Umfangsbereich und der zweite Umfangsbereich können bei im Vergleich zu herkömmlichen Lösungen annähernd gleichem Materialeinsatz möglichst nah am Rand des Grundkörpers verlaufen, so dass sich typischerweise eine verbesserte feldbeeinflussende Wirkung der Feldsteuerelektrode ergibt.

Bei Ausführungsformen weisen der erste Umfangsbereich und der zweite Umfangsbereich mindestens einen nach außerhalb des Grundkörpers geführten gemeinsamen Kontakt auf. Der gemeinsame Kontakt dient dazu, den ersten Umfangsbereich und den zweiten Umfangsbereich auf ein gemeinsames Bezugspotential bringen zu können.

Bei Ausführungsformen ist der erste Umfangsbereich der Feldsteuerelektrode im axialen Querschnitt zumindest bereichsweise flach ausgebildet. Alternativ oder zusätzlich ist bei Ausführungsformen der zweite Umfangsbereich der Feldsteuerelektrode im axialen Querschnitt zumindest bereichsweise flach ausgebildet. Typischerweise sind der erste Umfangsbereich und/oder der zweite Umfangsbereich aus einem flachen Elektrodenmaterial gebildet, beispielsweise aus einem flachen Stahlblechmaterial oder dergleichen.

Unter dem hierin verwendeten Begriff "flach" wird insbesondere ein Aufbau des jeweiligen Umfangsbereichs verstanden, wie er im Folgenden beschreiben ist: Im axialen Querschnitt weist der jeweilige Umfangsbereich zumindest einen Teil auf, der in der Schnittebene in einer Richtung eine deutlich größere Ausdehnung aufweist als in der dazu senkrechten Richtung. Der jeweilige Umfangsbereich verläuft also in einer Hauptausdehnungsrichtung, während er in der dazu senkrechten Richtung eine wesentlich geringere Ausdehnung aufweist, also im axialen Querschnitt zumindest bereichsweise dünn ausgebildet ist. Beispielsweise weist solch ein zumindest bereichsweise flach ausgebildeter Umfangsbereich eine Dicke von 10 mm oder weniger auf, vorzugsweise von 5 mm oder weniger, besonders bevorzugt von 3 mm oder weniger. Die Dicke kann bei Aspekten der Erfindung so gewählt werden, dass eine Stabilität der Feldsteuerelektrode gewährleistet ist und gleichzeitig möglichst wenig Elektrodenmaterial zum Einsatz kommt.

Der jeweilige flach ausgebildete Umfangsbereich kann dabei durchaus im axialen Querschnitt entlang eines Pfades verlaufen, der nicht unbedingt stets mit einer der Richtungen übereinstimmen muss, welche die Schnittebene aufspannen. Gemäß einem Aspekt der Erfindung weist ein beispielhaft ausgebildeter flacher Umfangsbereich in einer axialen Schnittebene einen ersten Teil auf, wobei sich an das eine Ende des ersten Teils ein zweiter Teil anschließt, und wobei sich an das andere Ende des ersten Teils ein dritter Teil anschließt. Der zweite Teil und/oder der dritte Teil verlaufen gemäß einem Aspekt der Erfindung zu dem ersten Teil abgewinkelt, beispielsweise unter einem jeweiligen Winkel zwischen 70° und 110° oder einem jeweiligen Winkel zwischen 80° und 100° zu dem ersten Teil. Gemäß einem Aspekt der Erfindung liegt das Verhältnis der gemeinsamen Länge der Pfade des zweiten Teils und des dritten Teils zur Länge des Pfades des ersten Teils 0,2 oder weniger, vorzugsweise 0,1 oder weniger.

Der erste Teil des flachen Umfangsbereichs verläuft gemäß einem Aspekt der Erfindung derart, dass das Verhältnis der Länge von dessen Pfad in der Hauptausdehnungsrichtung zu der Länge von dessen orthogonaler Projektion auf eine Ebene, die senkrecht zur jeweiligen axialen Schnittebene verläuft, mindestens 1 und höchstens 1,1 beträgt, vorzugsweise mindestens 1,01 und höchstens 1,05, besonders vorzugsweise mindestens 1,01 und höchstens 1,02.

Wenn ein Gussvorgang zum Herstellen des Gleichspannungs-Hochspannungsisolators zum Einsatz kommt, erfolgt während des Aushärtevorganges des Isoliermaterials typischerweise eine Kontraktion desselben. Ein typischerweise flacher Verlauf des ersten Umfangsbereichs und/oder deszweiten Umfangsbereichs kann eine verbesserte Flexibilität der Feldsteuerelektrode während der Kontraktion des Isoliermaterials bewirken. Typischerweise ist die Flexibilität begrenzt, d. h. die Feldsteuerelektrode ist weiterhin an sich formstabil, gibt jedoch beim Aushärten (bei der Kontraktion) der Gussmaterials geringfügig nach. Demzufolge kann die Wahrscheinlichkeit verringert werden, dass sich Hohlräume im Gussmaterial bilden. Ein flacher Verlauf des ersten Umfangsbereichs und/oder des zweiten Umfangsbereichs kann einen dahingehenden weiteren Vorteil bieten, dass die Feldsteuerelektrode bei geringem Materialeinsatz eine möglichst weite Ausdehnung innerhalb des Grundkörpers in axialer Richtung aufweist, wodurch die Feldsteuerwirkung verbessert wird. Erfindungsgemäss verläuft der flach ausgebildete erste Umfangsbereich im axialen Querschnitt ausgehend von der axialen Peripherie des Grundkörpers zumindest bereichsweise unter Ausbildung eines spitzen Winkels in Bezug auf die Axialrichtung in Richtung der Mitte des Grundkörpers. Alternativ oder zusätzlich verläuft bei Ausführungsformen der flach ausgebildete zweite Umfangsbereich im axialen Querschnitt ausgehend von der axialen Peripherie des Grundkörpers zumindest bereichsweise unter Ausbildung eines spitzen Winkels in Bezug auf die Axialrichtung in Richtung der Mitte des Grundkörpers. Die jeweilige axiale Peripherie des Grundkörpers ist typischerweise der Rand des Grundkörpers, dem der jeweilige Umfangsbereich in axialer Richtung am nächsten liegt.

Der spitze Winkel kann z. B. mehr als 3° oder mehr als 5° oder mehr als 10° betragen. Typischerweise beträgt der spitze Winkel nicht mehr als 25.

Der erste Umfangsbereich und/oder der zweite Umfangsbereich verläuft bzw. verlaufen also zumindest bereichsweise abgewinkelt in Bezug auf die Achsrichtung des Grundkörpers. Ein im spitzen Winkel abgewinkelter Verlauf zumindest von Teilen des ersten Umfangsbereichs und/oder des zweiten Umfangsbereichs kann dazu beitragen, dass das Gussmaterial beim Gussvorgang einfacher oder homogener an den Seiten des ersten Umfangsbereichs bzw. des zweiten Umfangsbereichs entlangläuft. Ein im spitzen Winkel abgewinkelter Verlauf zumindest von Teilen des ersten Umfangsbereichs und/oder des zweiten Umfangsbereichs kann auch bewirken, dass kleine Gasbläschen, die sich beim Einbringen des Gussmaterials in die Gussform bilden, beim Aufsteigen einfach entlang des angeschrägt verlaufenden ersten Umfangsbereichs bzw. des angeschrägt verlaufenden zweiten Umfangsbereichs emporsteigen. Dies kann ein Ausbilden von Gasansammlungen vermeiden, was die Homogenität des Isoliermaterials des Grundkörpers im ausgehärteten Zustand verbessert.

Bei Ausführungsformen weist der erste Umfangsbereich im axialen Querschnitt einen abgewinkelten Bereich auf, der im Wesentlichen parallel zu einer Außenfläche des Gleichspannungs-Hochspannungsisolators verläuft. Alternativ oder zusätzlich weist bei Ausführungsformen der zweite Umfangsbereich im axialen Querschnitt einen abgewinkelten Bereich auf, der im Wesentlichen parallel zu einer Außenfläche des Gleichspannungs-Hochspannungsisolators verläuft. Bei Ausführungsformen verläuft der jeweilige abgewinkelte Bereich im Wesentlichen parallel zu derjenigen Außenfläche des Grundkörpers des Gleichspannungs-Hochspannungsisolators, die diesem abgewinkelten Bereich am nächsten liegt. Der abgewinkelte Bereich entspricht gemäß Aspekten der vorliegenden Erfindung einem von dem oben erwähnten zweiten Teil oder dritten Teil des jeweiligen Umfangsbereichs.

Der jeweilige abgewinkelte Bereich verläuft bei Ausführungformen in einem Abstand von wenigen Millimetern zur Außenfläche des Grundkörpers. Der Abstand entspricht typischerweise der minimal möglichen Dicke des Isoliermaterials, die durch die Materialeigenschaften des Isoliermaterials und/oder durch das Herstellungsverfahren vorgegeben sind.

Bei typischen Ausführungsformen beträgt im axialen Querschnitt im Bereich der Durchdringung die gemeinsame Weite der Weite des ersten Umfangsbereichs und der Weite des zweiten Umfangsbereichs mindestens 30% oder mindestens 50% oder mindestens 70% der Gesamtweite des Gleichspannungs-Hochspannungsisolators.

Bei Ausführungsformen beträgt eine sich in Richtung der Achse erstreckende Weite der Durchdringung zumindest bereichsweise mehr als 5 mm oder mehr als 7 mm oder mehr als 9 mm. Wenn mehrere Durchdringungen vorgesehen sind, beträgt typischerweise die Weite jeder Durchdringung zumindest bereichsweise mehr als 5 mm oder mehr als 7 mm oder mehr als 9 mm. Gemäß einem Aspekt beträgt die Weite der Durchdringung bzw. der Durchdringungen nicht mehr als 20 mm.

Die jeweiligen Weiten entsprechen der Ausdehnung im axialen Querschnitt innerhalb der Schnittebene und parallel zur Achsrichtung. Die Messung der Weiten erfolgt also im Wesentlichen senkrecht zur Isolierrichtung, d. h. bei einem symmetrischen scheibenförmigen Isolatorkörper in Richtung der Achse.

Bei Aspekten der Erfindung ist die Gussform während des Gussvorgangs derart ausgerichtet, dass die Achsrichtung horizontal verläuft. In diesem Fall verläuft auch die sich ausbreitende Gussmaterial-Oberfläche horizontal. Die Weiten werden dann in der Horizontalrichtung gemessen.

Eine zumindest bereichsweise ausgebildete minimale Weite der Durchdringung von 5 mm trägt typischerweise dazu bei, dass das Gussmaterial während des Gussvorganges effizient in die Gussform läuft. Gleichzeitig kann die zumindest bereichsweise ausgebildete minimale Weite der Durchdringung von 5 mm dazu beitragen, dass sich aufsteigende Luftbläschen effizient am ersten Umfangsbereich und/oder am zweiten Umfangsbereich 20 entlang in Richtung der Durchdringung bewegen und aufsteigen, so dass die Homogenität des Isolatorkörpers verbessert wird.

Bei typischen Ausführungsformen ist der erste Umfangsbereich im Bereich der Durchdringung vom Rand des Grundkörpers in Radialrichtung weniger als 5 mm beabstandet. Alternativ oder zusätzlich ist bei typischen Ausführungsformen der zweite Umfangsbereich im Bereich der Durchdringung vom Rand des Grundkörpers in Radialrichtung weniger als 5 mm beabstandet. Hierdurch können sich eine verbesserte Feldsteuerwirkung und/oder sonstige verbesserte dielektrische Eigenschaften ergeben. Bei Aspekten der Erfindung ist der erste Umfangsbereich und/oder der zweite Umfangsbereich im Bereich der Durchdringung vom Rand des Grundkörpers in Radialrichtung nicht weniger als 1 mm beabstandet.

Es kann sich ein dahingehender Vorteil ergeben, dass die feldsteuernde Wirkung der Feldsteuerelektrode verbessert ist.

Bei typischen Ausführungsformen ist der Grundkörper in einem Querschnitt in einer Ebene, auf welcher die Achse senkrecht steht (in einem Querschnitt senkrecht zur Axialrichtung) scheibenartig ausgebildet, und der Grundkörper weist eine im Wesentlichen kreisrunde Querschnittsfläche auf. Eine derartige Isolatorform weist typischerweise gute Isolationseigenschaften bei einer definierten elektrischen Feldstärkeverteilung entlang des Isolatorkörpers auf. In diesem Querschnitt steht die Achse senkrecht zur Schnittebene, d. h. die Betrachtung auf die Schnittebene erfolgt in Axialrichtung.

Von einer im Wesentlichen kreisrunden Querschnittsfläche in dieser Schnittebene sind auch Isolatoren mit einer solchen Geometrie umfasst, bei welcher im radialen Randbereich nur bereichsweise entlang des Umlaufs kleinere Einkerbungen, kleinere Ausbuchtungen oder dergleichen vorgesehen sind, die beispielsweise zur Befestigung dienen. Auch stehen einer im Wesentlichen kreisrunden Querschnittsfläche beispielsweise Gasduchlassöffnungen innerhalb der Fläche nicht entgegen.

Bei typischen Ausführungsformen existiert eine Symmetrieebene, auf welcher die Achse senkrecht steht, wobei der Gleichspannungs-Hochspannungsisolator spiegelsymmetrisch zu der Symmetrieebene ausgebildet ist. Ein symmetrischer Aufbau kann zu verbesserten Isolationseigenschaften führen, beispielsweise zu einer verbesserten Homogenität der elektrischen Feldstärke entlang des Isolatorkörpers.

Typische hierin beschriebene Gleichspannungs-Hochspannungsisolatoren sind bevorzugt gemäß einem der hierin beschriebenen typischen Verfahren hergestellt worden.

Gemäß einem weiteren Aspekt der Erfindung wird ein gasisoliertes Hochspannungssystem für Gleichspannung angegeben, das einen typischen der oben beschriebenen Gleichspannungs-Hochspannungsisolatoren aufweist. Der Gleichspannungs-Hochspannungsisolator ist in seinem peripheren radialen Randbereich zwischen Fixiereinrichtungen eines leitfähigen Gehäuses des gasisolierten Hochspannungssystems eingespannt. Die Fixiereinrichtungen sind gemäß einem Aspekt der Erfindung als Spannflansche ausgebildet, welche die Gasdichtigkeit des gasisolierten Hochspannungssystems im Übergangsbereich zu dem eingespannten Gleichspannungs-Hochspannungsisolator gewährleisten.

Typischerweise ist das gasisolierte Hochspannungssystem für Gleichspannung eine gasisolierte Hochspannungs-Schaltanlage für Gleichspannung, oder es ist eine gasisolierte Leitung für Gleichspannung.

Bei typischen Ausführungsformen weist das gasisolierte Hochspannungssystem einen oben beschriebenen typischen Gleichspannungs-Hochspannungsisolator mit mindestens einem abgewinkelten Bereich am ersten Umfangsbereich und/oder am zweiten Umfangsbereich auf. Bei dem typischen gasisolierten Hochspannungssystem liegt das Verhältnis im axialen Querschnitt zwischen dem mittleren Abstand des abgewinkelten Bereichs zur nächstgelegenen Außenfläche des Grundkörpers bei senkrechter Messung zum Verlauf des Grundkörpers in dem betreffenden Bereich und dem Abstand der Außenfläche des Grundkörpers zur jeweiligen Fixiereinrichtung im Bereich von 0,5 bis 1,5 oder im Bereich von 0,8 bis 1,2.

Gemäß einem weiteren Aspekt der Erfindung wird ein typischer der hierin beschriebenen Gleichspannungs-Hochspannungsisolatoren zur Isolierung eines mit Gleichspannung beaufschlagten Leiters verwendet, insbesondere in einer gasisolierten Hochspannungs-Schaltanlage. Der verwendete Gleichspannungs-Hochspannungsisolator ist bevorzugt gemäß einem typischen der hierin beschriebenen Verfahren hergestellt worden. Beispielsweise kann ein typischer Gleichspannungs-Hochspannungsisolator, wie hierin beschrieben, der zur Isolierung eines mit Gleichspannung beaufschlagten Leiters verwendet wird, als Schottisolator, als Stützisolator oder dergleichen zum Einsatz kommen.

Die Erfindung wird nachstehend anhand der beiliegenden Zeichnungen erläutert, wobei die Figuren zeigen:
Fig. 1 eine perspektivische schematische Ansicht einer Feldsteuerelektrode, die in einem Gleichspannungs-Hochspannungsisolator gemäß einer Ausführungsform der Erfindung verwendet wird,
Fig. 2 eine schematische Ansicht eines Teils der Feldsteuerelektrode aus Fig. 1 in einem axialen Querschnitt;
Fig. 3 eine schematische Ansicht eines anderen Teils der Feldsteuerelektrode aus Fig. 1 im axialen Querschnitt;
Fig. 4 eine schematische Ansicht eines gasisolierten Hochspannungssystems für Gleichspannung mit einem Gleichspannungs-Hochspannungsisolator gemäß der Ausführungsform, im axialen Querschnitt; und
Fig. 5 eine vergrößerte schematische Ansicht eines Teils B des gasisolierten Hochspannungssystems für Gleichspannung aus Fig. 4.

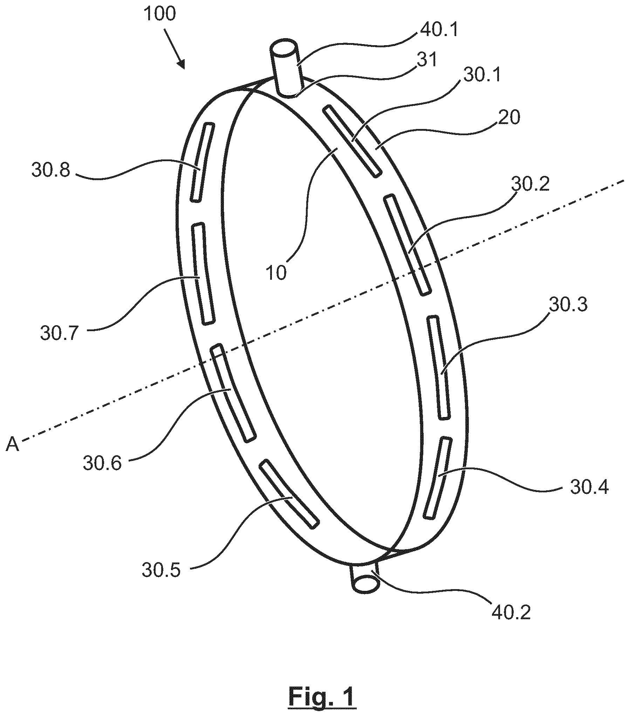

Fig. 1 zeigt eine perspektivische schematische Ansicht einer Feldsteuerelektrode 100. Die Achse A, um welche der in der Fig. 1 nicht dargestellte Grundkörper eines Gleichspannungs-Hochspannungsisolators umläuft, welcher mit der Feldsteuerelektrode 100 versehen ist, ist in der Fig. 1 gleichwohl eingezeichnet, um die geometrischen Beziehungen einfacher erläutern zu können.

Die Feldsteuerelektrode 100 ist insgesamt aus einem leitenden Material gebildet, welches vorzugsweise ein Blechmaterial und gemäß der vorliegenden Ausführungsform ein Aluminium-Blechmaterial ist. Die Verwendung eines Blechmaterials hat den Vorteil, dass dies eine besonders einfache Herstellung der Feldsteuerelektrode 100 erlaubt. Es ist jedoch auch möglich, dass die Feldsteuerelektrode 100 aus einem isolierenden Körper mit einer elektrisch leitfähigen Beschichtung gebildet ist, beispielsweise einem Polymerkörper mit einer Metallbeschichtung.

Das leitende Material bewirkt, dass die Feldsteuerelektrode 100 zumindest in ihrem äußeren Bereich auf einem definierten Potential gehalten werden kann, und zwar auch dann, wenn transiente Vorgänge wie Spannungsüberhöhungen infolge von Schalthandlungen oder dergleichen auftreten. Die Feldsteuerelektrode 100 weist einen Widerstand auf, der pro Achtelsegment der Feldsteuerelektrode 100 nicht größer als 1 kΩ, bevorzugt nicht größer als 10 Ω, noch bevorzugter nicht größer als 1 Ω ist.

Die Feldsteuerelektrode 100 gemäß der dargestellten Ausführungsform ist derart ausgebildet, dass sie einen umlaufenden ersten Umfangsbereich 10 und einen im Wesentlichen parallel dazu umlaufenden zweiten Umfangsbereich 20 aufweist. Die Umfangsbereiche 10, 20 sind in Richtung der Achse A zueinander versetzt und in der dargestellten Ausführungsform in regelmäßigen Intervallen miteinander verbunden, so dass zwischen den Umfangsbereichen 10, 20 eine Mehrzahl von Durchdringungen 30 ausgebildet werden.

Die in der Ausführungsform gezeigte Anzahl von Durchdringungen 30 (dort mit 30.1 bis 30.8 bezeichnet) ist lediglich beispielhaft und nicht einschränkend; auch ist die Form der Durchdringungen 30 nur schematisch angedeutet. Mit Hilfe der Verbindungsbereiche zwischen den Durchdringungen ist es möglich, eine zufriedenstellende Stabilität der Feldsteuerelektrode 100 insgesamt zu erzielen, insbesondere im Hinblick auf die Verwindungssteifigkeit während des Einbringens in eine Gussform oder dergleichen.

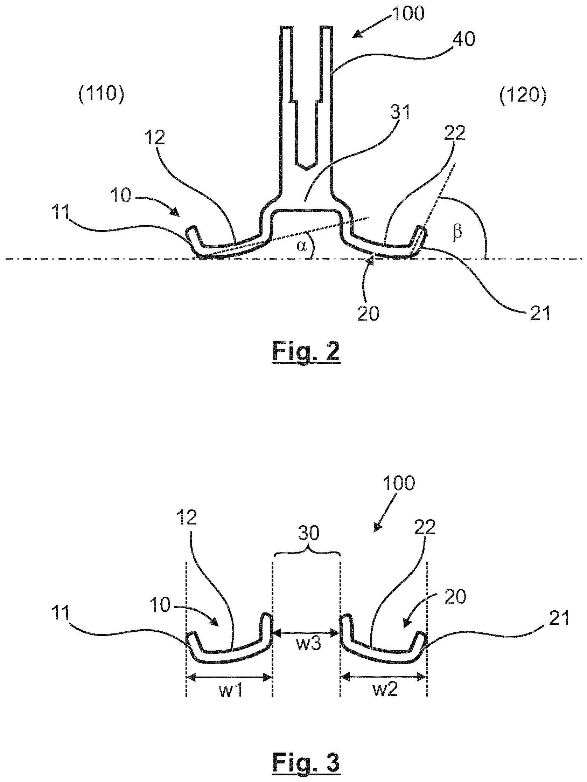

Die Ausbildung der Umfangsbereiche 10, 20 der Feldsteuerelektrode 100 gemäß der Ausführungsform ist aus den Darstellungen in den Fig. 2 und 3 näher ersichtlich.

Fig. 2 zeigt eine schematische Ansicht eines Teils der Feldsteuerelektrode 100 aus Fig. 1 in einem axialen Querschnitt. Der axiale Querschnitt ist ein Schnitt durch die Feldsteuerelektrode mit der Achse A in der Schnittebene.

Der in der Fig. 2 gezeigte Schnitt verläuft durch einen Bereich der Feldsteuerelektrode 100, in welchem der erste Umfangsbereich 10 und der zweite Umfangsbereich 20 miteinander verbunden sind und mittels eines gemeinsamen Kontakts 40 gemeinsam kontaktierbar sind. Der Einfachheit halber ist in der Schnittdarstellung in Fig. 2 nur einer der beiden in der Schnittebene gegenüberliegenden Teile der Feldsteuerelektrode 100 gezeigt; in der Darstellung der Fig. 2 ist dies derjenige Bereich der Feldsteuerelektrode 100, der in der Darstellung in Fig. 1 oben gezeigt ist.

Ein in der Ansicht mit dem Bezugszeichen 12 versehener Teil des ersten Umfangsbereichs 10 verläuft unter Ausbildung eines spitzen Winkels α in Bezug auf die Axialrichtung. Eine zur Achse A des Grundkörpers parallele Tangente an dem ersten Umfangsbereich 10 ist in der Ansicht mittels einer strichpunktierten Linie angedeutet. Die strichpunktierte Linie bildet somit einen Schenkel des Winkels a. Der andere Schenkel des Winkels α verläuft im dargestellten axialen Querschnitt zentral durch den Teil 12 des ersten Umfangsbereichs 10.

Die jeweilige Peripherie in Axialrichtung für den ersten Umfangsbereich 10 und den zweiten Umfangsbereich 20 ist jeweils mit dem Bezugszeichen 110 bzw. 120 versehen. Bei einer symmetrischen Ausbildung der Feldsteuerelektrode 100, wie sie in der Ausführungsform gezeigt ist, wird demnach die Peripherie 110 bzw. 120 als derjenige jeweilige Bereich der Feldsteuerelektrode 100 bezeichnet, der von der Symmetrieebene entfernt liegt.

Der Teil 12 des ersten Umfangsbereichs 10 verläuft demnach ausgehend von der axialen Peripherie 110, also in Bezug auf die Feldsteuerelektrode 100 von außen her in Richtung der Symmetrieebene schräg auf diese zu. Der Winkel α ist typischerweise größer als 3° und vorzugsweise größer als 5°, besonders vorzugsweise größer als 10°. Er ist nicht größer als etwa 25°. Auf analoge Weise verläuft ein Teil 22 des zweiten Umfangsbereichs 20 ausgehend von der axialen Peripherie 120, also wiederum in Bezug auf die Feldsteuerelektrode 100 von außen her in Richtung der Symmetrieebene schräg auf diese zu. Dieser (in Fig. 2 nicht bezeichnete Winkel) ist wiederum typischerweise größer als 3° und vorzugsweise größer als 5°, besonders vorzugsweise größer als 10°. Er ist nicht größer als etwa 25°.

In einem Verbindungsbereich 31 gehen in der Schnittansicht in Fig. 2 der erste Umfangsbereich 10 und der zweite Umfangsbereich 20 ineinander über. Der in Fig. 1 dargestellte Verbindungsbereich 31 geht seinerseits in einen gemeinsamen Kontakt 40 über. Die Feldsteuerelektrode 100 gemäß der Ausführungsform hat zwei gemeinsame Kontakte 40.1, 40.2, wie in der oben diskutierten Fig. 1 gezeigt. Die Anzahl an gemeinsamen Kontakten 40 ist jedoch hierauf nicht beschränkt. Weitere Verbindungsbereiche zwischen dem ersten Umfangsbereich 10 und dem zweiten Umfangsbereich 20, also Bereiche der Feldsteuerelektrode, in welchen die Durchdringung 30 nicht ausgebildet ist, sind gemäß der dargestellten Ausführungsform ohne einen gemeinsamen Kontakt 40 vorgesehen.

Der gemeinsame Kontakt 40 dient dazu, den ersten Umfangsbereich 10 und den zweiten Umfangsbereich 20 gemeinsam und auf einfache Weise auf ein definiertes Potential bringen zu können. Bei Verwendung eines Gleichspannungs-Hochspannungsisolators gemäß der Ausführungsform in einem gasisolierten Hochspannungssystem, wie weiter unten noch beschrieben, ist dieses Potential typischerweise mit dem Potential einer Fixiereinrichtung identisch. Hierdurch ist ein effektives Steuern des elektrischen Feldes entlang der Oberfläche des Gleichspannungs-Hochspannungsisolators möglich.

Der in Fig. 2 dargestellte Verbindungsbereich 31 verläuft derart, dass die Feldsteuerelektrode 100 in dem Verbindungsbereich 31 radial einwärts verläuft, also gegen die Achse A gerichtet ist.

Der in der Fig. 3 gezeigte Schnitt verläuft durch einen Bereich der Feldsteuerelektrode 100, in welchem der erste Umfangsbereich 10 und der zweite Umfangsbereich 20 nicht miteinander verbunden sind. Wiederum ist der Einfachheit halber in der Schnittdarstellung in Fig. 3 nur einer der beiden in der Schnittebene gegenüberliegenden Teile der Feldsteuerelektrode 100 gezeigt.

Auch in diesem Bereich verlaufen die Teile 12 bzw. 22 des ersten Umfangsbereichs 10 bzw. des zweiten Umfangsbereichs 20 unter einem spitzen Winkel in Bezug auf die Achsrichtung. Zwischen dem ersten Umfangsbereich 10 und dem zweiten Umfangsbereich 20 ist hier eine Durchdringung 30 mit der Weite w3 ausgebildet, wobei die Weite w3 in der dargestellten Ausführungsform mehr als 5 mm beträgt. In weiteren Ausführungsformen beträgt die Weite w3 mehr als 7 mm oder mehr als 9 mm. Die Weite beträgt im Allgemeinen nicht mehr als etwa 20 mm.

Durch den symmetrischen Aufbau der Feldsteuerelektrode 100 gemäß der dargestellten Ausführungsform entspricht eine Weite w1 des ersten Umfangsbereichs 10 einer Weite w2 des zweiten Umfangsbereichs. Zusammengenommen beträgt die gemeinsame Weite wl+w2 mindestens 30%, vorzugsweise mindestens 50% der Gesamtweite des Gleichspannungs-Hochspannungsisolators. In der dargestellten Ausführungsform beträgt die gemeinsame Weite w1+w2 mehr als 70% der Gesamtweite des Gleichspannungs-Hochspannungsisolators. Bei gegebener Weite w3 der Durchdringung ist die gemeinsame Weite w1+w2 begrenzt durch die minimale Schichtdicke eines Grundkörpers 50 des Gleichspannungs-Hochspannungsisolators, wie weiter unten noch erläutert.

Zum Herstellen eines Gleichspannungs-Hochspannungsisolators gemäß der Ausführungsform mittels eines typischen Verfahrens wird die beschriebene Feldsteuerelektrode 100 in eine passende (nicht dargestellte) Gussform eingebracht und fixiert. Die Gussform ist typischerweise aus zwei oder mehr Teilschalen gebildet, welche vor dem Gussvorgang zusammengefügt werden.

Die Gussform ist während des Gussvorganges im Wesentlichen senkrecht angeordnet, d. h. die Achse A des zu gießenden Grundkörpers und damit die Achse der Feldsteuerelektrode 100 verläuft während des Gussvorganges im Wesentlichen horizontal. Ein Gussmaterial, welches nach seiner Aushärtung den Grundkörper 50 des Gleichspannungs-Hochspannungsisolators bilden soll, wird in die Gussform eingebracht. Das Gussmaterial ist typischerweise ein isolierendes härtbares Kunstharz, gemäß der Ausführungsform ein anorganisch gefülltes Epoxidharzsystem.

Beim Einbringen des Gussmaterials läuft dieses seitlich an den Umfangsbereichen 10, 20 der Feldsteuerelektrode entlang; in den Bereichen, in welchen die Durchdringung 30 ausgebildet ist, läuft das Gussmaterial durch die Durchdringung 30 hindurch. Hierdurch wird typischerweise der Vorgang des Einbringens von Gussmaterial gleichmäßiger. Sobald das eingebrachte Gussmaterial an dem am weitesten untenliegenden Punkt der Gussform angekommen ist, beginnt sich eine Füllung aus Gussmaterial auszubilden, deren Pegel im Laufe des Gussvorganges innerhalb der Gussform ansteigt.

Gegebenenfalls bilden sich während des Einbringens des Gussmaterials Verwirbelungen, welche wiederum den Einschluss von Luftbläschen zur Folge haben können. Die Luftbläschen steigen innerhalb der Füllung auf. Bei herkömmlichen Hochspannungsisolatoren mit Feldsteuerelektroden besteht die Gefahr, dass sich die Luftbläschen beim Aufsteigen während des Gussvorganges an der Feldsteuerelektrode sammeln, während das Gussmaterial bereits beginnt, auszuhärten. Die Luftbläschen bleiben dann nach Abschluss des Aushärtungsvorganges im Gussmaterial eingeschlossen, was zu einer Materialinhomogenität des Isolatorkörpers führt.

Dahingegen ist bei dem Gleichspannungs-Hochspannungsisolator gemäß der Ausführungsform der Teil 12 des ersten Umfangsbereichs 10 der Feldsteuerelektrode in Bezug auf die Achsrichtung geneigt, d. h. der Teil 12 verläuft unter dem spitzen Winkel α in Bezug auf die Axialrichtung. Dadurch wird die Gefahr verringert, dass sich die aufsteigenden Luftbläschen im Bereich der Feldsteuerelektrode 100 sammeln, und die Homogenität des Materials des entstehenden Grundkörpers 50 wird verbessert.

Wie oben erwähnt, schrumpft das Gussmaterial des Hochspannungsisolators in der Regel während des Aushärtens leicht. Bei herkömmlichen Hochspannungsisolatoren mit Feldsteuerelektroden besteht nun ferner die Gefahr, dass sich durch die Kontraktion um die Feldsteuerelektroden herum kleine Hohlräume bilden.

Bei dem Gleichspannungs-Hochspannungsisolator gemäß der Ausführungsform sind jedoch der erste Umfangsbereich 10 sowie der zweite Umfangsbereich 20 flach ausgebildet, d. h. sie weisen im axialen Querschnitt zumindest in den Bereichen, in welchen die Durchdringung 30 ausgebildet ist, eine weitere Ausdehnung in Axialrichtung als in Radialrichtung des Grundkörpers 50 auf. Dadurch ist es möglich, die Feldsteuerelektrode 100 insgesamt stabil, insbesondere verwindungsstabil auszubilden, gleichzeitig aber eine gewisse Federwirkung in der Umfangsbereiche 10, 20 zu ermöglichen.

Nach dem Aushärten wird der Gleichspannungs-Hochspannungsisolator der Gussform entnommen. Der sich ergebende Grundkörper 50 ist gemäß der Ausführungsform scheibenförmig ausgebildet und weist eine kreisrunde Querschnittsfläche auf, was typischerweise vorteilhafte dielektrische Eigenschaften mit sich bringt. Die Erfindung ist jedoch nicht auf eine derartige Scheibenform oder eine derartige Form mit kreisrunder Querschnittsfläche beschränkt.

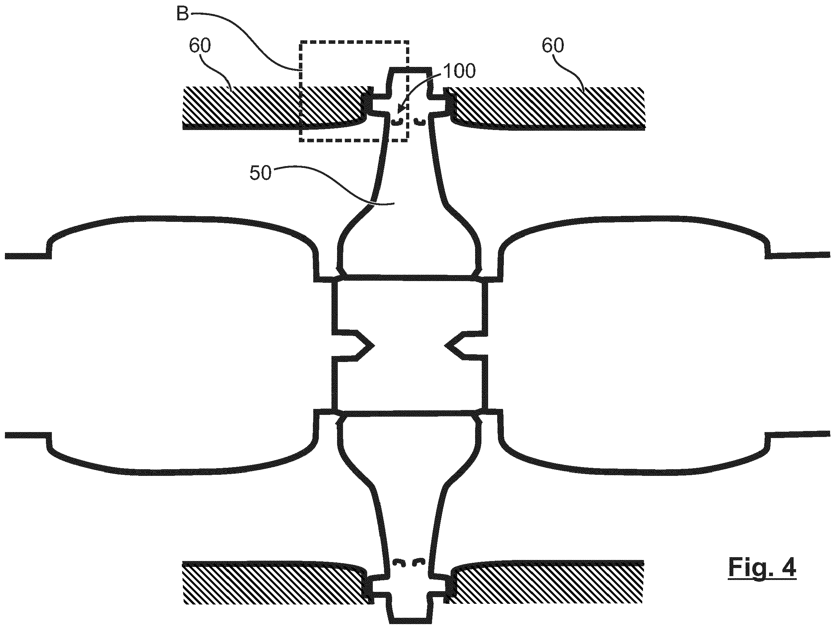

Fig. 4 zeigt eine schematische Ansicht eines gasisolierten Hochspannungssystems für Gleichspannung mit einem Gleichspannungs-Hochspannungsisolator gemäß der Ausführungsform, im axialen Querschnitt. Das gasisolierte Hochspannungssystem ist gemäß der Ausführungsform eine Hochspannungs-Schaltanlage für Gleichstrom. Der Grundkörper 50 des Gleichspannungs-Hochspannungsisolators verläuft ausgehend von einem mit Gleichstrom beaufschlagten Innenleiter (in der Fig. 4 zentral dargestellt) radial bis zu einem Bereich, in welchem der Grundkörper mittels Flanschen 60 in der Hochspannungs-Schaltanlage eingespannt ist. Die Flansche 60 dienen als Fixiereinrichtung für den Grundkörper 50 des Gleichspannungs-Hochspannungsisolators.

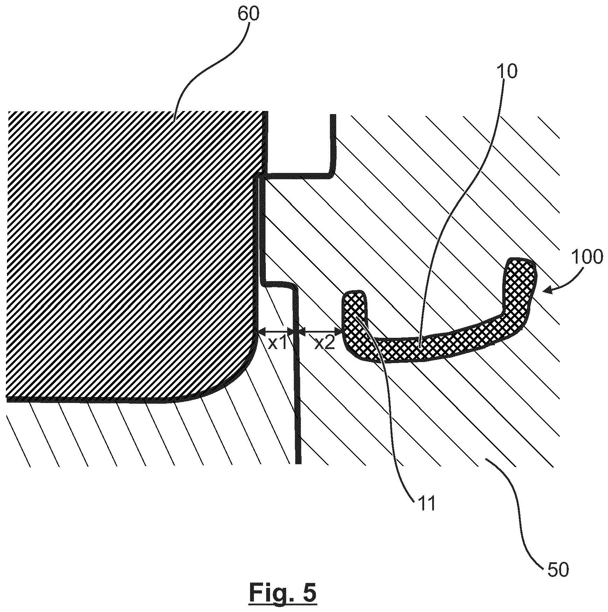

Fig. 5 ist eine vergrößerte schematische Ansicht ungefähr desjenigen Bereichs des gasisolierten Hochspannungssystems für Gleichspannung, der Fig. 4 durch eine gestrichelte Linie umrandet ist und mit B bezeichnet ist.

Wie in der vergrößerten Darstellung der Fig. 5 besser erkennbar, ist ein Teil der Feldsteuerelektrode 100 in einen Grundkörper 50 des Gleichspannungs-Hochspannungsisolators eingelassen. Der Gleichspannungs-Hochspannungsisolator ist insgesamt mittels eines oben beschriebenen Gussvorganges hergestellt worden.

In der dargestellten Ausführungsform ist der abgewinkelte Bereich 11 des ersten Umfangsbereichs 10 der Feldsteuerelektrode 100 so vorgesehen, dass er im Wesentlichen parallel zu der Außenfläche des Grundkörpers 50 in diesem Bereich verläuft; wie dargestellt, beträgt der Winkel β (vgl. Fig. 2) in der dargestellten Ausführungsform ca. 90°. Der Winkel β ist jedoch nicht auf diesen Wert beschränkt, und bei weiteren Ausführungsformen können andere Werte vorgesehen sein. Durch den im Wesentlichen parallelen Verlauf des abgewinkelten Bereichs 11 zur Außenfläche des Grundkörpers 50 ergeben sich typischerweise vorteilhafte dielektrische Eigenschaften des Gleichspannungs-Hochspannungsisolators im Betrieb.

Der gemittelte Abstand x2 des abgewinkelten Bereichs 11 des ersten Umfangsbereichs 10 zum nächstgelegenen Rand des Grundkörpers 50, d. h. zur Außenfläche des Grundkörpers 50 auf derjenigen Seite, die dem jeweiligen Flansch 60 nächstliegend zugewandt ist, beträgt in der dargestellten Ausführungsform etwas weniger als 5 mm. Hierdurch ist bei dem gemäß der Ausführungsform verwendeten Epoxidharz als Gussmaterial für den Grundkörper 50 eine ausreichende Stabilität und Beständigkeit bei gleichzeitig ausreichendem Isolationsverhalten sichergestellt. In anderen Ausführungsformen ist der Abstand x2 nicht auf den oben genannten Wert beschränkt. Bevorzugt entspricht der Abstand x2 der minimalen Dicke des Grundkörpers 50 in diesem Bereich, die elektrisch und mechanisch sinnvoll ist.

Das Verhältnis zwischen dem Abstand x2 und einem Abstand x1 der Außenfläche des Grundkörpers 50 zu der Fixiereinrichtung, d. h. vorliegend zu dem Flansch 60, liegt bei Ausführungsformen im Bereich von 0,5 bis 1,5, bevorzugt im Bereich von 0,8 bis 1,2. Bei der dargestellten Ausführungsform beträgt das Verhältnis von x2 zu x1 ca. 0,8.

Analoge und entsprechende Eigenschaften ergeben sich in der dargestellten Ausführungsform durch den weitgehend symmetrischen Aufbau der Feldsteuerelektrode auch für den zweiten Umfangsbereich 20 der Feldsteuerelektrode, der aus Gründen der Einfachheit nicht dargestellt und gesondert beschrieben ist.

Die Erfindung ist nicht auf die zuvor beschriebene Ausführungsform beschränkt, vielmehr wird der Umfang der Erfindung durch die beigefügten Ansprüche bestimmt.

## Patentansprüche

1. Gleichspannungs-Hochspannungsisolator zur Isolierung eines mit Gleichspannung beaufschlagten Leiters, mit:
einem um eine Achse (A) verlaufenden Grundkörper (50) aus Isoliermaterial; und
einer in Umfangsrichtung innerhalb des Grundkörpers umlaufenden Feldsteuerelektrode,
wobei die Feldsteuerelektrode zumindest bereichsweise einen ersten Umfangsbereich (10) und einen von dem ersten Umfangsbereich in Richtung der Achse (A) beabstandet verlaufenden zweiten Umfangsbereich (20) aufweist, so dass zwischen dem ersten Umfangsbereich (10) und dem zweiten Umfangsbereich (20) eine Durchdringung (30) ausgebildet ist,
**dadurch gekennzeichnet, dass** der erste Umfangsbereich (10) und/oder der zweite Umfangsbereich (20) im axialen Querschnitt ausgehend von der jeweiligen axialen Peripherie (110, 120) des Grundkörpers zumindest bereichsweise unter Ausbildung eines spitzen Winkels (α) in Bezug auf die Axialrichtung in Richtung der Mitte des Grundkörpers verlaufen, wobei der spitze Winkel (α) mehr als 3° beträgt.

2. Gleichspannungs-Hochspannungsisolator nach Anspruch 1,
wobei der spitze Winkel (α) mehr als 5° beträgt.

3. Gleichspannungs-Hochspannungsisolator nach Anspruch 1,
wobei der spitze Winkel (α) mehr als 10° beträgt.

4. Gleichspannungs-Hochspannungsisolator nach Anspruch 1,
wobei der erste Umfangsbereich (10) und der zweite Umfangsbereich (20) mindestens einen nach außerhalb des Grundkörpers geführten gemeinsamen Kontakt (40, 40.1, 40.2) aufweisen.

5. Gleichspannungs-Hochspannungsisolator nach einem der Ansprüche 1 bis 4,
wobei der erste Umfangsbereich (10) und/oder der zweite Umfangsbereich (20) im axialen Querschnitt flach ausgebildet sind.

6. Gleichspannungs-Hochspannungsisolator nach einem der Ansprüche 1 bis 5,
wobei der erste Umfangsbereich (10) und/oder der zweite Umfangsbereich (20) im axialen Querschnitt jeweils einen abgewinkelten Bereich (11, 21) aufweisen, der jeweils im Wesentlichen parallel zu einer Außenfläche des Gleichspannungs-Hochspannungsisolators verläuft.

7. Gleichspannungs-Hochspannungsisolator nach einem der Ansprüche 1 bis 6,
wobei eine sich in Richtung der Achse (A) erstreckende Weite (w3) der Durchdringung (30) zumindest bereichsweise mehr als 5 mm beträgt.

8. Gleichspannungs-Hochspannungsisolator nach einem der Ansprüche 1 bis 6,
wobei eine sich in Richtung der Achse (A) erstreckende Weite (w3) der Durchdringung (30) zumindest bereichsweise mehr als 7 mm beträgt.

9. Gleichspannungs-Hochspannungsisolator nach einem der Ansprüche 1 bis 6,
wobei eine sich in Richtung der Achse (A) erstreckende Weite (w3) der Durchdringung (30) zumindest bereichsweise mehr als 9 mm beträgt.

10. Gleichspannungs-Hochspannungsisolator nach einem der Ansprüche 1 bis 9,
wobei der erste Umfangsbereich (10) und/oder der zweite Umfangsbereich (20) im Bereich der Durchdringung (30) vom Rand des Grundkörpers (50) in Radialrichtung weniger als 5 mm beabstandet ist beziehungsweise sind.

11. Gleichspannungs-Hochspannungsisolator nach einem der Ansprüche 1 bis 10,
wobei der erste Umfangsbereich (10) und/oder der zweite Umfangsbereich (20) im Bereich der Durchdringung (30) vom Rand des Grundkörpers in Axialrichtung weniger als 5 mm beabstandet ist bzw. sind.

12. Gleichspannungs-Hochspannungsisolator nach einem der Ansprüche 1 bis 11,
wobei im axialen Querschnitt im Bereich der Durchdringung (30) eine gemeinsame Weite der Weite (w1) des ersten Umfangsbereichs (10) und der Weite (w2) des zweiten Umfangsbereichs (20) mindestens 30% einer sich in Richtung der Achse (A) erstreckenden Gesamtweite des Gleichspannungs-Hochspannungsisolators beträgt.

13. Gleichspannungs-Hochspannungsisolator nach einem der Ansprüche 1 bis 11,
wobei im axialen Querschnitt im Bereich der Durchdringung (30) eine gemeinsame Weite der Weite (w1) des ersten Umfangsbereichs (10) und der Weite (w2) des zweiten Umfangsbereichs (20) mindestens 50% einer sich in Richtung der Achse (A) erstreckenden Gesamtweite des Gleichspannungs-Hochspannungsisolators beträgt.

14. Gleichspannungs-Hochspannungsisolator nach einem der Ansprüche 1 bis 11,
wobei im axialen Querschnitt im Bereich der Durchdringung (30) eine gemeinsame Weite der Weite (w1) des ersten Umfangsbereichs (10) und der Weite (w2) des zweiten Umfangsbereichs (20) mindestens 70% einer sich in Richtung der Achse (A) erstreckenden Gesamtweite des Gleichspannungs-Hochspannungsisolators beträgt.

15. Gleichspannungs-Hochspannungsisolator nach einem der Ansprüche 1 bis 14,
wobei der Grundkörper (50) in einem Querschnitt in einer Ebene, auf welcher die Achse senkrecht steht, scheibenförmig ausgebildet ist und eine kreisrunde Querschnittsfläche aufweist.

16. Gleichspannungs-Hochspannungsisolator nach einem der Ansprüche 1 bis 15,
wobei eine Symmetrieebene existiert, auf welcher die Achse (A) senkrecht steht, wobei der Gleichspannungs-Hochspannungsisolator spiegelsymmetrisch zu der Symmetrieebene ausgebildet ist.

17. Verwendung eines Gleichspannungs-Hochspannungsisolators nach einem der Ansprüche 1 bis 16 zur Isolierung eines mit Gleichspannung beaufschlagten Leiters.

18. Gasisoliertes Hochspannungssystem für Gleichspannung, insbesondere gasisolierte Hochspannungs-Schaltanlage für Gleichspannung oder gasisolierte Leitung für Gleichspannung, mit mindestens einem Gleichspannungs-Hochspannungsisolator nach einem der Ansprüche 1 bis 16,
wobei der Gleichspannungs-Hochspannungsisolator in seinem peripheren radialen Randbereich zwischen Fixiereinrichtungen (60) eines leitfähigen Gehäuses des gasisolierten Hochspannungssystems eingespannt ist.

19. Gasisoliertes Hochspannungssystem nach Anspruch 18,
wobei das Verhältnis im axialen Querschnitt aus dem mittleren Abstand (x2) des abgewinkelten Bereichs (11, 21) zur nächstgelegenen Außenfläche des Grundkörpers (50) bei senkrechter Messung zum Verlauf des Grundkörpers (50) in dem betreffenden Bereich zu dem Abstand (x1) der Außenfläche des Grundkörpers (50) zur jeweiligen Fixiereinrichtung (60) im Bereich von 0,5 bis 1,5 liegt.

20. Gasisoliertes Hochspannungssystem nach Anspruch 18,
wobei das Verhältnis im axialen Querschnitt aus dem mittleren Abstand (x2) des abgewinkelten Bereichs (11, 21) zur nächstgelegenen Außenfläche des Grundkörpers (50) bei senkrechter Messung zum Verlauf des Grundkörpers (50) in dem betreffenden Bereich zu dem Abstand (x1) der Außenfläche des Grundkörpers (50) zur jeweiligen Fixiereinrichtung (60) im Bereich von 0,8 bis 1,2 liegt.

21. Verfahren zum Herstellen eines Gleichspannungs-Hochspannungsisolators zur Isolierung eines mit Gleichspannung beaufschlagten Leiters, mit:
Bereitstellen einer Gussform für einen Grundkörper (50);
Anordnen einer im herzustellenden Grundkörper (50) umlaufenden peripheren Feldsteuerelektrode in der Gussform, wobei die Feldsteuerelektrode zumindest bereichsweise einen ersten Umfangsbereich (10) und einen von dem ersten Umfangsbereich (10) in Richtung der Achse (A) des Grundkörpers (50) beabstandet verlaufenden zweiten Umfangsbereich (20) aufweist, so dass zwischen dem ersten Umfangsbereich und dem zweiten Umfangsbereich eine Durchdringung (30) ausgebildet ist; und
Gießen eines isolierenden Gussmaterials in die Gussform,
**dadurch gekennzeichnet, dass** erste Umfangsbereich (10) und/oder der zweite Umfangsbereich (20) im axialen Querschnitt ausgehend von der jeweiligen axialen Peripherie (110, 120) des Grundkörpers zumindest bereichsweise unter Ausbildung eines spitzen Winkels (α) in Bezug auf die Axialrichtung in Richtung der Mitte des Grundkörpers verlaufen, insbesondere unter Ausbildung eines spitzen Winkels (αa) von mehr als 3°, vorzugsweise von mehr als 5°, besonders vorzugsweise von mehr als 10°.

22. Verfahren nach Anspruch 21,
wobei die Achse (A) des Grundkörpers (50) während des Gussvorganges im Wesentlichen horizontal verläuft.

## Claims

1. High-voltage DC insulator for insulating a conductor to which DC voltage is applied, comprising:
a main body (50) which runs about an axis (A) and is composed of insulating material; and
a field control electrode which runs around within the main body in the circumferential direction,
wherein the field control electrode has, at least in regions, a first circumferential region (10) and a second circumferential region (20) which runs at a distance from the first circumferential region in the direction of the axis (A), so that a through-passage (30) is formed between the first circumferential region (10) and the second circumferential region (20),
**characterized in that** the first circumferential region (10) and/or the second circumferential region (20) run, in axial cross section, starting from the respective axial periphery (110, 120) of the main body at least in regions so as to form an acute angle (α) in relation to the axial direction in the direction of the centre of the main body, wherein the acute angle (α) is greater than 3°.

2. High-voltage DC insulator according to Claim 1, wherein the acute angle (α) is greater than 5°.

3. High-voltage DC insulator according to Claim 1, wherein the acute angle (α) is greater than 10°.

4. High-voltage DC insulator according to Claim 1,
wherein the first circumferential region (10) and the second circumferential region (20) have at least one common contact (40, 40.1, 40.2) which is guided outside the main body.

5. High-voltage DC insulator according to one of Claims 1 to 4,
wherein the first circumferential region (10) and/or the second circumferential region (20) are of flat design in axial cross section.

6. High-voltage DC insulator according to one of Claims 1 to 5,
wherein the first circumferential region (10) and/or the second circumferential region (20) each have, in axial cross section, an angled region (11, 21) which in each case runs substantially parallel to an outer surface of the high-voltage DC insulator.

7. High-voltage DC insulator according to one of Claims 1 to 6,
wherein a width (w3) of the through-passage (30), which width extends in the direction of the axis (A), is greater than 5 mm at least in regions.

8. High-voltage DC insulator according to one of Claims 1 to 6,
wherein a width (w3) of the through-passage (30), which width extends in the direction of the axis (A), is greater than 7 mm at least in regions.

9. High-voltage DC insulator according to one of Claims 1 to 6,
wherein a width (w3) of the through-passage (30), which width extends in the direction of the axis (A), is greater than 9 mm at least in regions.

10. High-voltage DC insulator according to one of Claims 1 to 9, wherein the first circumferential region (10) and/or the second circumferential region (20) is or are at a distance of less than 5 mm from the edge of the main body (50) in the radial direction in the region of the through-passage (30).

11. High-voltage DC insulator according to one of Claims 1 to 10,
wherein the first circumferential region (10) and/or the second circumferential region (20) is or are at a distance of less than 5 mm from the edge of the main body in the axial direction in the region of the through-passage (30).

12. High-voltage DC insulator according to one of Claims 1 to 11,
wherein a common width of the width (w1) of the first circumferential region (10) and the width (w2) of the second circumferential region (20), in axial cross section, in the region of the through-passage (30) is at least 30% of a total width of the high-voltage DC insulator which extends in the direction of the axis (A) .

13. High-voltage DC insulator according to one of Claims 1 to 11,
wherein a common width of the width (w1) of the first circumferential region (10) and the width (w2) of the second circumferential region (20), in axial cross section, in the region of the through-passage (30) is at least 50% of a total width of the high-voltage DC insulator which extends in the direction of the axis (A) .

14. High-voltage DC insulator according to one of Claims 1 to 11,
wherein a common width of the width (w1) of the first circumferential region (10) and the width (w2) of the second circumferential region (20), in axial cross section, in the region of the through-passage (30) is at least 70% of a total width of the high-voltage DC insulator which extends in the direction of the axis (A) .

15. High-voltage DC insulator according to one of Claims 1 to 14,
wherein the main body (50) is of disc-like design in cross section in a plane on which the axis is vertical, and has a round cross-sectional area.

16. High-voltage DC insulator according to one of Claims 1 to 15,
wherein a plane of symmetry exists on which the axis (A) is vertical, wherein the high-voltage DC insulator is designed in mirror-image symmetry with respect to the plane of symmetry.

17. Use of a high-voltage DC insulator according to one of Claims 1 to 16 for insulating a conductor to which DC voltage is applied.

18. Gas-insulated high-voltage system for DC voltage, in particular gas-insulated high-voltage switchgear installation for DC voltage or gas-insulated conduction of DC voltage, comprising at least one high-voltage DC insulator according to one of Claims 1 to 16,
wherein the high-voltage DC insulator is clamped between fixing devices (60) of a conductive housing of the gas-insulated high-voltage system in its peripheral radial edge region.

19. Gas-insulated high-voltage system according to Claim 18,
wherein the ratio in axial cross section from the middle distance (x2) of the angled region (11, 21) from the closest outer surface of the main body (50) with vertical measurement to the profile of the main body (50) in the relevant region to the distance (x1) of the outer surface of the main body (50) from the respective fixing device (60) is in the range of from 0.5 to 1.5.

20. Gas-insulated high-voltage system according to Claim 18,
wherein the ratio in axial cross section from the middle distance (x2) of the angled region (11, 21) from the closest outer surface of the main body (50) with vertical measurement to the profile of the main body (50) in the relevant region to the distance (x1) of the outer surface of the main body (50) from the respective fixing device (60) is in the range of from 0.8 to 1.2.

21. Method for producing a high-voltage DC insulator for insulating a conductor to which DC voltage is applied, comprising:
providing a casting mould for a main body (50);
arranging a peripheral field control electrode, which runs around in the main body (50) to be produced, in the casting mould, wherein the field control electrode has, at least in regions, a first circumferential region (10) and a second circumferential region (20) which runs at a distance from the first circumferential region (10) in the direction of the axis (A) of the main body (50), so that a through-passage (30) is formed between the first circumferential region and the second circumferential region; and
pouring an insulating casting material into the casting mould,
**characterized in** the first circumferential region (10) and/or the second circumferential region (20) run, in axial cross section, starting from the respective axial periphery (110, 120) of the main body at least in regions so as to form an acute angle (α) in relation to the axial direction in the direction of the centre of the main body, in particular so as to form an acute angle (α) of greater than 3°, preferably of greater than 5°, particularly preferably of greater than 10°.

22. Method according to Claim 21,
wherein the axis (A) of the main body (50) runs substantially horizontally during the casting process.

## Revendications

1. Isolateur à haute tension pour tension continue destiné à isoler un conducteur sur lequel est appliquée une tension continue et présentant
un corps de base (50) en matériau isolant, qui s'étend autour d'un axe (A) et
une électrode périphérique de commande de champ située à l'intérieur du corps de base,
l'électrode périphérique de commande de champ présentant au moins dans certaines parties une première partie périphérique (10) et une deuxième partie périphérique (20) qui s'étend à distance de la première partie périphérique dans la direction de l'axe (A) de telle sorte qu'un passage (30) soit formé entre la première partie périphérique (10) et la deuxième partie périphérique (20),
**caractérisé en ce que**
la première partie périphérique (10) et/ou la deuxième partie périphérique (20) s'étendent en coupe axiale entre la périphérie axiale (110, 120) du corps de base, au moins dans certaines parties en formant en direction du milieu du corps de base un angle aigu (α) avec la direction axiale, l'angle aigu (α) étant supérieur à 3°.

2. Isolateur à haute tension pour tension continue selon la revendication 1, dans lequel l'angle aigu (α) est supérieur à 5°.

3. Isolateur à haute tension pour tension continue selon la revendication 1, dans lequel l'angle aigu (α) est supérieur à 10°.

4. Isolateur à haute tension pour tension continue selon la revendication 1, dans lequel la première partie périphérique (10) et la deuxième partie périphérique (20) présentent au moins un contact commun (40, 40.1, 40.2) prolongé vers l'extérieur du corps de base.

5. Isolateur à haute tension pour tension continue selon l'une des revendications 1 à 4, dans lequel la première partie périphérique (10) et/ou la deuxième partie périphérique (20) sont aplaties en coupe axiale.

6. Isolateur à haute tension pour tension continue selon l'une des revendications 1 à 5, dans lequel la première partie périphérique (10) et/ou la deuxième partie périphérique (20) présentent en coupe axiale une partie coudée (11, 21) qui s'étend essentiellement en parallèle à une surface extérieure de l'isolateur à haute tension continue.

7. Isolateur à haute tension pour tension continue selon l'une des revendications 1 à 6, dans lequel la largeur (w3) du passage (30) dans la direction de l'axe (A) est supérieure à 5 mm au moins dans certaines parties.

8. Isolateur à haute tension pour tension continue selon l'une des revendications 1 à 6, dans lequel la largeur (w3) du passage (30) dans la direction de l'axe (A) est supérieure à 7 mm au moins dans certaines parties.

9. Isolateur à haute tension pour tension continue selon l'une des revendications 1 à 6, dans lequel la largeur (w3) du passage (30) dans la direction de l'axe (A) est supérieure à 9 mm au moins dans certaines parties.

10. Isolateur à haute tension pour tension continue selon l'une des revendications 1 à 9, dans lequel la première partie périphérique (10) et/ou la deuxième partie périphérique (20) sont situées à une distance inférieure à 5 mm du bord du corps de base dans la direction radiale au niveau du passage (30).

11. Isolateur à haute tension pour tension continue selon l'une des revendications 1 à 10, dans lequel la première partie périphérique (10) et/ou la deuxième partie périphérique (20) sont situées à une distance inférieure à 5 mm du bord du corps de base dans la direction axiale au niveau du passage (30).

12. Isolateur à haute tension pour tension continue selon l'une des revendications 1 à 11, dans lequel en coupe axiale, au niveau du passage (30), la largeur commune de la largeur (w1) de la première partie périphérique (10) et de la largeur (w2) de la deuxième partie périphérique (20) vaut au moins 30 % d'une largeur totale dans la direction de l'axe (A) de l'isolateur à haute tension pour tension continue.

13. Isolateur à haute tension pour tension continue selon l'une des revendications 1 à 11, dans lequel en coupe axiale, au niveau du passage (30), la largeur commune de la largeur (w1) de la première partie périphérique (10) et de la largeur (w2) de la deuxième partie périphérique (20) vaut au moins 50 % d'une largeur totale dans la direction de l'axe (A) de l'isolateur à haute tension pour tension continue.

14. Isolateur à haute tension pour tension continue selon l'une des revendications 1 à 11, dans lequel en coupe axiale, au niveau du passage (30), la largeur commune de la largeur (w1) de la première partie périphérique (10) et de la largeur (w2) de la deuxième partie périphérique (20) vaut au moins 70 % d'une largeur totale dans la direction de l'axe (A) de l'isolateur à haute tension pour tension continue.

15. Isolateur à haute tension pour tension continue selon l'une des revendications 1 à 14, dans lequel le corps de base (50) a en coupe transversale dans un plan perpendiculaire à l'axe la forme d'un disque, la surface de la section transversale étant circulaire.

16. Isolateur à haute tension pour tension continue selon l'une des revendications 1 à 15, dans lequel il existe un plan de symétrie auquel l'axe (A) est perpendiculaire, l'isolateur à haute tension pour tension continue étant symétrique par rapport au plan de symétrie.

17. Isolateur à haute tension pour tension continue selon l'une des revendications 1 à 16, destiné à l'isolation d'un conducteur sur lequel une tension continue est appliquée.

18. Système à haute tension continue isolé par gaz, en particulier installation de commutation continue isolée par gaz ou conducteur continu isolé par gaz présentant au moins un l'isolateur à haute tension pour tension continue selon l'une des revendications 1 à 16, l'isolateur à haute tension pour tension continue étant serré dans sa bordure périphérique radiale entre des dispositifs de fixation (60) d'un boîtier conducteur du système à haute tension isolé par gaz.

19. Système à haute tension continue isolé par gaz selon la revendication 18, dans lequel en coupe axiale, le rapport entre la distance moyenne (x2) de la partie coudée (11, 21) par rapport à la surface extérieure la plus proche du corps de base (50), mesuré perpendiculairement à l'extension du corps de base (50) dans la partie concernée et la distance (x1) entre la surface extérieure du corps de base (50) et le dispositif de fixation (60) concerné est compris dans la plage de 0,5 à 1,5.

20. Système à haute tension continue isolé par gaz selon la revendication 18, dans lequel en coupe axiale, le rapport entre la distance moyenne (x2) de la partie coudée (11, 21) par rapport à la surface extérieure la plus proche du corps de base (50), mesuré perpendiculairement à l'extension du corps de base (50) dans la partie concernée et la distance (x1) entre la surface extérieure du corps de base (50) et le dispositif de fixation (60) concerné est compris dans la plage de 0,8 et 1,2.

21. Procédé de fabrication d'un isolateur à haute tension pour tension continue destiné à isoler un conducteur sur lequel est appliquée une tension continue, le procédé comportant les étapes qui consistent à :
préparer un moule de coulée pour un corps de base (50),
disposer dans le moule de coulée une électrode périphérique de commande de champ qui s'étend dans le corps de base (50), l'électrode périphérique de commande de champ présentant au moins dans certaines parties une première partie périphérique (10) et une deuxième partie périphérique (20) qui s'étend à distance de la première partie périphérique dans la direction de l'axe (A) du corps de base (50) de telle sorte qu'un passage (30) soit formé entre la première partie périphérique (10) et la deuxième partie périphérique (20), et
couler dans le moule de coulée un matériau isolant,
**caractérisé en ce que**
la première partie périphérique (10) et/ou la deuxième partie périphérique (20) s'étendent en coupe axiale entre la périphérie axiale (110, 120) du corps de base, au moins dans certaines parties en formant en direction du milieu du corps de base un angle aigu (α) avec la direction axiale, l'angle aigu (α) étant supérieur à 3°, de préférence supérieur à 5° et de façon particulièrement préférable supérieur à 10°.

22. Procédé selon la revendication 21, dans lequel l'axe (A) du corps de base (50) s'étend essentiellement à l'horizontale pendant l'opération de coulée.
